Europäisches Patentamt

European Patent Office

Office européen des brevets

(19)

(11) Publication number: **0 338 736**
**A2**

# EUROPEAN PATENT APPLICATION

(21) Application number: **89303726.7**

(22) Date of filing: **14.04.89**

(51) Int. Cl.⁴: **C08G 73/10 , C08J 5/00 , B29C 43/00**

(30) Priority: **19.04.88 JP 94474/88**

(43) Date of publication of application:
**25.10.89 Bulletin 89/43**

(84) Designated Contracting States:
**DE FR GB**

(71) Applicant: **UBE INDUSTRIES, LTD.**
**12-32, Nishihonmachi 1-chome**
**Ube-shi, Yamaguchi-ken 755(JP)**

(72) Inventor: **Kumamoto, Kazuo Ube Chemical**
**Kojo**
**Ube Industries Ltd. 1978-10 Oaza Kogushi**
**Ube-shi Yamaguchi(JP)**
Inventor: **Takabayashi, Seiichirou Ube**
**Chemical Kojo**
**Ube Industries Ltd. 1978-10 Oaza Kogushi**
**Ube-shi Yamaguchi(JP)**
Inventor: **Matsui, Yuji Ube Chemical Kojo**
**Ube Industries Ltd. 1978-10 Oaza Kogushi**
**Ube-shi Yamaguchi(JP)**

(74) Representative: **Arthur, Bryan Edward et al**
**Withers & Rogers 4 Dyer's Buildings Holborn**
**London EC1N 2JT(GB)**

(54) **Shaped aromatic imide polymer article and method of producing same.**

(57) A shaped aromatic imide polymer article having an excellent mechanical strength, heat resistance, and dimensional stability is produced from aromatic imide polymer particles having a size of 0.5 to 100 μm and consisting essentially of a polymerization-imidization product of a tetracarboxylic acid component comprising 80 molar% or more of a biphenyltetracarboxylic dianhydride with a diamine component comprising 50 molar% or more of a phenylene diamine, by a powder compression molding procedure at a temperature of 200° C to 600° C and under a compression pressure of 300 to 10,000 kg/cm².

EP 0 338 736 A2

# SHAPED AROMATIC IMIDE POLYMER ARTICLE AND METHOD OF PRODUCING SAME

## BACKGROUND OF THE INVENTION

### 1) Field of the Invention

The present invention relates to a shaped aromatic imide polymer article and a method of producing same. More particularly, the present invention relates to a shaped aromatic imide polymer article prepared by a powder compressing procedure and having an excellent mechanical strength, for example, compression strength, a superior heat resistance, and an enhanced dimensional stability, and a method of producing same.

### 2) Description of the Related Arts

Various types of conventional shaped polyimide articles produced by powder compression molding an aromatic polyimide resin powder, which is a polymerization product of an aromatic tetracarboxylic acid component and an aromatic diamine component, and conventional processes for producing same are disclosed in, for example, U.S. Patent Nos. 3,413,394, 3,179,630, 3,179,631, 3,179,632, 3,179,633 and 3,179,634. In the above prior arts, it is disclosed that aromatic polyimide resins usable for the powder compression molding method can be obtained from a number of different types of aromatic tetracarboxylic acids and aromatic diamines, but the aromatic polyimides specifically disclosed in the above prior arts are limited to those obtained from:

(a) aromatic tetracarboxylic acid compounds selected from piromellitic dianhydride (PMDA) and benzophenonetetracarboxylic dianhydrides (BTDA) and,

(b) aromatic diamines selected from 4,4'-diaminodiphenylpropane (DDP), benzidine (PP), and 4,4'-diaminodiphenylether (4,4'-oxydianiline, DADE or POP).

The conventional powder compression molded articles produced from the above-mentioned specifically known aromatic polyimide resin powder do not have a satisfactory heat resistance and dimensional stability.

It is known that, if the aromatic polyimide resin powder does not have a melting point or secondary transition point suitable for the powder compression molding procedure, it is difficult to obtain a compression shaped article having a satisfactory mechanical strength.

Also, it is known that none of the conventional aromatic polyimide resins is suitable for producing the powder compression molded articles having a satisfactory mechanical strength and dimensional stability.

## SUMMARY OF THE INVENTION

An object of the present invention is to provide a shaped aromatic imide polymer article formed by a powder compression molding procedure and having an excellent heat resistance and mechanical strenth, and a satisfactory dimensional stability, and a method of producing same.

The above-mentioned object can be obtained by the shaped aromatic imide polymer article which comprises particles of an aromatic imide polymer having an average size of 0.5 to 100 $\mu$m and consisting essentially of a polymerization-imidization product of a tetracarboxylic acid component consisting of 80 to 100 molar% of at least one member selected from biphenyltetracarboxylic acids and dianhydrides, esters and salts thereof and 0 to 20 molar% of at least one additional member selected from aromatic tetracarboxylic acids and dianhydride, esters and salts thereof other than the above-mentioned biphenyltetracarboxylic compounds, with a diamine component consisting of 50 to 100 molar% of at least one member selected from phenylene diamines and 0 to 50 molar% of at least one additional member selected from aromatic diamines other than the phenylene diamine, said particles of the aromatic imide polymer being heat compression bonded to each other to form a shaped article by a powder compression molding procedure. The above-mentioned shaped aromatic imide polymer article is produced by the method of the present invention which comprises:

charging a mold with aromatic imide polymer particles consisting essentially of a polymerization-imidization product of a tetracarboxylic acid component consisting of 80 to 100 molar% of at least one member selected from biphenyltetracarboxylic acids and dianhydrides, esters and salts thereof and 0 to 20 molar% of at least one additional member selected from aromatic tetracarboxylic acids and dianhydrides, esters and salts thereof other than the above-mentioned biphenyltetracarboxylic compounds, with a diamine component consisting of 50 to 100 molar% of at least one member selected form phenylene diamines and 0 to 50 molar% of at least one additional member selected from aromatic diamines other than the phenylene diamines, and having an average particle size of from 0.5 to 100 μm; and

heat-compressing the polymeric particles in the mold at a temperature of 200°C to 600°C under a compression pressure of 300 to 10000 kg/cm², to form a shaped article.

## DESCRIPTION OF THE PREFERRED EMBODIMENTS

The shaped aromatic imide polymer article of the present invention is produced by a heat compression molding of particles of a specific aromatic imide polymer having a size of 0.5 to 100 μm, preferably 1 to 60 μm, more particularly 3 to 50 μm. The aromatic imide polymer particles in the shaped article are heat compression bonded to each other.

When the size of the aromatic imide polymer particles is smaller than 0.5 μm, the resultant charge in the mold exhibits a small apparent density, and thus the charge must be compressed at a large compression ratio and the depth of the mold must be large. Also, the particles are easily aggregated, and thus exhibit a low molding property and the resultant shaped article contains undesirable voids therein.

When the size of the aromatic imide polymer particles is larger than 100 μm, the particles come into contact with each other in a small contact area exhibit a poor bonding property to each other, and thus the resultant shaped article contains undesirable voids and exhibits an unsatisfactory mechanical strength.

The specific aromatic imide polymer is a polymerization-imidization product of a specific tetracarboxylic acid component with a specific diamine component.

The specific tetracarboxylic acid component usable for the present invention consists essentially of 80 to 100 molar%, preferably 90 to 100 molar%, of at least one member selected from biphenyltetracarboxylic acids and dianhydride, esters and salts thereof and 0 to 20%, preferably 0 to 10 molar%, of at least one additional member selected from aromatic tetracarboxylic acids and dianhydrides, esters and salts thereof other than the above-mentioned biphenyltetracarboxylic compounds.

The biphenyltetracarboxylic acid compound is selected from 3,3',4,4'-biphenyltetracarboxylic acid, 2,3,3',4'-biphenyltetracarboxylic acid, and dianhydrides, esters and salts of the above-mentioned acids.

The additional aromatic tetracarboxylic acids compounds include pyromellitic acid, 3,3',4,4'-benzophenone tetracarboxylic acid, 2,2-bis(3,4-dicarboxyphenyl)propane, bis(3,4-dicarboxyphenyl)methane, bis-(3,4-dicarboxyphenyl)ether, bis(3,4-dicarboxyphenyl)sulfone, and dianhydrides, esters and salts of the above-mentioned acids. Pyromellitic acid and dianhydride thereof are preferable as the additional aromatic tetracarboxylic acid compound.

The specific diamine component usable for the present invention consists essentially of 50 to 100 molar%, preferably 60 to 100 molar%, of at least one member selected from phenylene diamines and 0 to 50 molar%, preferably 0 to 40 molar%, of at least one additional member selected from aromatic diamines other than the above-mentioned phenylene diamines. The phenylene diamine is preferably selected from 1,4-diaminophenylene(p-phenylenediamine) and 1,3-diaminophenylene(m-phenylenediamine).

The additional aromatic diamine is preferably selected from 4,4'-diaminodiphenylether, 4,4'-diaminodiphenylsulfone, 4,4'-diaminodiphenylmethane, 2,2-bis(4,4'-diaminodiphenyl)propane, 3,3'-dimethoxybenzidine, bis(4-aminophenyl)diethylsilane, 1,4-bis(4-aminophenoxy)benzene and 1,3-bis(4-aminophenoxy)-benzene and more preferably is 4,4'-diaminophenylether.

The tetracarboxylic acid component and the diamine component are mixed is a molar ratio of about 1:1 and polymerized and imidized by a usual method, to provide an aromatic imide polymer.

The aromatic imide polymer preferably exhibits a second-order transition temperature of 350°C or more, more preferably 400°C or more, or substantially does not exhibit a second-order transition temperature in a differential thermal analysis in a temperature range of 450°C or less at a heating rate of 20°C/min in a flow of nitrogen gas.

The above-mentioned aromatic imide polymer particles contribute greatly to an enhancement of the heat resistance and dimensional stability.

The powder compression molded aromatic imide polymer article of the present invention preferably has an apparent density of 1.40 g/cm² or more at a temperature of 23°C, a Rockwell hardness number of 100 to 120 determined by the M scale in which a steel ball having a diameter of 1/4 inch is subjected to a pressure of 100 kg. Also, the shaped article of the present invention exhibits strong mechanical properties.

For example, the shaped article of the present invention usually exhibits a flexural strength of 600 to 1800 $kg/cm^2$, preferably 700 to 1500 $kg/cm^2$, at a temperature of 23°C, a flexural modulus of elasticity of 50 x $10^3$ to 90 x $10^3$ $kg/cm^2$ at a temperature of 23°C, and a compression strength of 1500 $kg/cm^2$ or more, preferably 1800 to 2500 $kg/cm^2$, at a temperature of 23°C.

Also, the shaped aromatic imide polymer article of the present invention exhibits an excellent heat resistance and dimensional stability throughout a wide range of temperatures from room temperature to about 450°C. For example, the shaped article of the present invention has a very small coefficient of linear thermal expansion of 3.5 x $10^{-5}$ to 5.0 x $10^{-5}$ $cm/cm/°C$ in the temperature range of from 23°C to 300°C, a thermal shrinkage of 0.1% or less, preferably 0.05% or less, in the temperature range of from 23°C to 350°C, a loss in weight at a constant temperature of 400°C of 1.0% or less at a heating time of 20 hours, and a thermal deformation temperature (0.254 mm deformation) of 500°C or more.

The shaped article of the present invention optionally contains a filler consisting of at least one member selected from inorganic fillers, for example, silica, mica, kaolin, asbestos, bron nitride, aluminum oxide, iron oxides, graphite, molybdenum sulfide and iron sulfide, and organic fillers, for example, fluorine-containing polymer resins.

The filler is preferably added in an amount of 1% to 50% based on the weight of the aromatic imide polymer particles.

In the method of the present invention, the aromatic imide polymer resin particles are charged in a mold and the charge in the mold is heat compressed at a temperature of 200°C to 600°C, preferably 250°C to 550°C, more preferably 300°C to 500°C, under a compression pressure of 300 to 10000 $kg/cm^2$, preferably 500 to 8000 $kg/cm^2$, more preferably 600 to 6000 $kg/cm^2$, to form a shaped article.

The aromatic imide polymer resin particles to be subjected to the heat-compression procedure are preferably dried and substantially free from volatile substances. Preferably, the aromatic imide polymer resin particles have a volatile substance content of 0.5% by weight or less.

In a preferable heat compression procedure,

(a) an aromatic imide polymer powder is changed in a mold and pre-heated in an oven at a temperature of 100°C to 400°C, more preferably 200°C to 380°C, under a reduced pressure of, for example, from 50 to 10 mmHg, or atmospheric pressure, for 1 to 20 hours, preferably 3 to 15 hours;

(b) the preheated aromatic imide polymer particles in the mold are placed in a heat compression molding machine and heat compressed in one or more steps at a temperature of 250°C to 550°C, more preferably 300°C to 500°C, under a compression pressure of 500 to 8000 $kg/cm^2$, more preferably 600 to 6000 $kg/cm^2$, for 0.1 to 20 hours, more preferably 0.5 to 15 hours,

(c) optionally, the resultant powder compression molded article is post-heated (or post-cured) in an oven at a temperature of 400°C to 600°C, under a reduced pressure or at atmospheric pressure, for about 0.5 to 10 hours, and

(d) finally the resultant powder compression molded article is cooled to a temperature of about 0°C to 40°C.

In another preferable heat compression procedure, the heat compression procedure is carried out in two or more steps. For example, a dried or preheated aromatic imide polymer powder in a mold is first heat compressed at a temperature of 250°C to 400°C, under a compression pressure of about 500 to 8000 $kg/cm^2$, for 0.05 to 1 hour; the temperature of the polymer powder is raised at a heat-elevation rate of 0.1 to 10°C/min, more preferably 0.5 to 5°C/min, to a level of 5 to 300°C higher than the heat compression temperature in the first heat compression step, more preferably to a level of 400°C to 550°C; and the heated polymer powder is again heat compressed at the above-mentioned temperature, under a compression pressure in the same range as mentioned above, for 0.1 to 1 hour.

In the method of the present invention, preferably a volatile substance generated from the charge in the mold is eliminated during the heat compressing procedure, by venting.

The heat compressing apparatus usable for the method of the present invention is selected from, for example, a four-pole type hydraulic molding press and a high pressure hot press.

The aromatic imide polymer powder may be pre-shaped into a precursory shaped article by the same method as that employed when using a rotary press or a tabletting machine.

EXAMPLES

The present invention will be further explained by way of specific examples, which are representative and do not in any way restrict the scope of the present invention.

In the examples, the following tests were carried out in the manner as mentioned below.

(1) The second-order transition temperature of the aromatic imide polymer powder was determined by a differential thermal analysis using a differential thermal analyzer (DSC-2C type made by Parkin Elmer Co.) at a heating rate of 20° C/min while flowing nitrogen gas through the analyzer.

(2) The tensile strength (kg/cm$^2$) of the shaped article was determined in accordance with ASTM D-638, at temperatures of 23° C and 260° C.

(3) The flexural strength (kg/cm$^2$) and flexural modulus of elasticity (x 10$^3$ kg/cm$^2$) of the shaped article were determined in accordance with ASTM D-790, at temperatures of 23° C and 260° C.

(4) The compression strength (kg/cm$^2$), compression modulus of elasticity (x 10$^3$ kg/cm$^2$), and compression stress (kg/cm$^2$) at a 10% strain of the shaped article, were determined in accordance with ASTM D-695 at a temperature of 23° C.

(5) The Rockwell hardness number of the shaped article was determined by a Rockwell hardness test, on the M scale in accordance with ASTM D-785, at a temperature of 23° C.

(6) The apparent density (g/cm$^2$) of the shaped article was obtained by a testing method similar to that defined in ASTM D-792, at a temperature of 23° C.

(7) The coefficient of thermal linear expansion (x 10$^{-5}$ cm/cm/° C) of the shaped article was determined by a thermal machine analyzer made by Rigaku Denki K.K. in a temperature range of from 23° C to 300° C and under a load of 5 g applied to a specimen having a length of 10 mm and a width of 5 mm.

(8) Losses (%) in weight of the shaped article at a constant temperature were determined by the thermal machine analyzer at a constant temperature of 400° C at heating times of 1, 5, 10, 15, and 20 hours.

(9) The thermal deformation temperature of the shaped article was determined by a thermal deformation temperature-testing method of ASTM D-648 by using a heat distortion temperature (HDT) tester (made by Yasuda Seiki K.K.).

Example 1

An aromatic imide polymer powder was prepared by a polymerization-imidization of 3,3′,4,4′-biphenyltetracarboxylic dianhydride (s-BPDA) with p-phenylenediamine (PPD) in a usual manner. The resultant aromatic imide polymer particles had an average size of 8 μm and did not exhibit a second-order transition point in a temperature range of 400° C or less.

The aromatic imide polymer powder was charged in a box-type mold having a width of 110 mm, a length of 110 mm, and a height of 150 mm, of a comparison molding machine, and preheated in an oven at a temperature of 350° C, under a reduced pressure, for about 10 hours.

The preheated polymer powder was first heat compressed at a temperature of 350° C, under a compression pressure of 4000 kg/cm$^2$, for 10 minutes.

Then, the temperature of the first heat compressed polymer powder in the mold was raised to a level of 480° C, under the same pressure as mentioned above, over a time of about 130 minutes. Next, the polymer powder was again heat compressed at the same temperature and compression pressure as mentioned above, for 30 minutes, while venting the volatile substance generated from the charge.

After the compressive pressure was released, the resultant shaped article was removed from the mold and post-heated in an oven at a temperature of 450° C for 2 hours.

Finally, the resultant shaped article was allowed to naturally cool in the atmosphere.

The resultant shaped article had a length of 110 mm, a width of 110 mm, and a thickness of 30 mm.

The shaped article was cut to provide a plurality of plates (specimens) having a length of 105 mm, a width of 105 mm, and a thickness of 28 mm.

The specimens were subjected to the above-mentioned tests.

The results are shown in Table 1.

Comparative Example 1

The same procedures as those in Example 1 were carried out except that the p-phenylene diamine (PPD) was replaced by 4,4'-diaminodiphenylether (DADE) and the resultant aromatic imide polymer particles had an average size of 12 µm and exhibited a second-order transition temperature of 293°C.

The results of the tests are shown in Table 1.

Comparative Example 2

The same procedures as those in Example 1 were carried out except that the 3,3',4,4'-biphenyltetracarboxylic dianhydride (s-BPDA) was replaced by pyromellitic dianhydride (PMDA), the p-phenylenediamine (PPD) was replaced by 4,4'-diaminodiphenylether (DADE), and the resultant aromatic imide polymer particles had an average size of 15 µm and did not exhibit a second-order transition temperature in the temperature range of 400°C or less.

The results of the tests are shown in Table 1.

Table 1

| Item | Example No. | Example 1 | Comparative Example 1 | Comparative Example 2 |
|---|---|---|---|---|
| Tensile strength | at 23°C $(kg/cm^2)$ | 680 | 1180 | 875 |
| | at 260°C | 350 | 420 | 420 |
| Flexural strength | at 23°C $(kg/cm^2)$ | 1193 | 1640 | 1330 |
| | at 260°C | - | 600 | 770 |
| Flexural modulus of elasticity | at 23°C $(\times 10^3 \ kg/cm^2)$ | 70 | 42.5 | 31.5 |
| | at 260°C | - | 21.3 | 17.5 |
| Compression stress | at 23°C $(kg/cm^2)$ | 2090 | 1675 | 1350 |
| Compression strength | at 23°C $(kg/cm^2)$ | 2220 | - | - |
| Compression modulus of elasticity | at 23°C $(\times 10^3 \ kg/cm^2)$ | 27.0 | 26.5 | 24.5 |
| Rockwell hardness number | (M scale) | 108 | 113 | 102 |
| Apparent density | at 23°C $(g/cm^2)$ | 1.46 | 1.41 | 1.43 |
| Coefficient of thermal linear expansion | at 23°C to 300°C $(cm/cm/°C)$ | 4.4 | 6.8 | 5.3 |

Table 1 (continued)

| Example No.<br>Item | Example 1 | Comparative Example 1 | Comparative Example 2 |
|---|---|---|---|
| Loss in weight at 400°C (x $10^{-5}$ %) | | | |
| 1 hour after | 0.06 | 0.10 | 0.13 |
| 5 hours after | 0.31 | 0.52 | 0.62 |
| 10 hours after | 0.57 | 0.96 | 1.32 |
| 15 hours after | 0.81 | 1.49 | 2.20 |
| 20 hours after | 0.93 | 2.17 | 3.20 |
| Thermal deformation temperature (°C) | > 500 | 407.8 | 399.9 |

Example 2

The same procedures as mentioned in Example 1 were carried out, with the following exceptions.

After the first heat compressing procedures, the temperature of the first heat compressed polymer powder was raised from 350°C to a level of 450°C, under a compression pressure of 4000 kg/cm², over about 4 hours and the polymer powder was again heat compressed at the same temperature and compression pressure as mentioned above for 2 hours, while venting the volatile substrate from the mold.

The shaped article taken up from the mold was gradually cooled in a desiccator.

The resultant shaped article had the same dimensions as mentioned in Example 1.

The specimens (plates) prepared from the shaped article by cutting had a length of 100 mm, a width of 100 mm, and a thickness of 2 mm.

These specimens were subjected to a thermal shrinkage test. In this test, a pair of cut marks spaced at a distance of 77 mm from each other were formed on the surface of the specimens in each of the longitudinal and transverse directions, and the specimens were kept in a desiccator at room temperature for about 40 hours.

Then the specimens were heated in an oven at a temperature of 350°C for one hour, and cooled in a desiccator for one hour.

The distance between the cut marks on the specimens in the longitudinal and transverse directions thereof were measured by a testing microscope.

When the distance between the cut marks on the original specimen were represented by $l_0$, and the distance between the cut masks on the heat treated specimen were represented by $l_1$, the thermal shrinkage Sh of the specimen was calculated from the following equation:

$$Sh \ (\%) \ = \ \frac{l_0 \ - \ l_1}{l_0} \ x \ 100\% \cdot$$

Thereafter, the heat treated specimens were further heated in an oven at a temperature of 350°C for one hour, and cooled in a desiccator for one hour.

The same shrinkage measurement as mentioned above was twice more applied to the further heated specimens.

The specimens heated three times were further heated at a temperature of 350°C for 2 hours. The same shrinkage measurements were applied to the further heated specimens.

The results are shown in Table 2.

The shaped article exhibited the following properties.

| | |
|---|---|
| Flexural strength at room temperature | 948 kg/cm$^2$ |
| Flexural modulus of elasticity at room temperature | 66.5 x 10$^3$ kg/cm$^2$ |
| Rockwell hardness number (M scale) | 105 |
| Apparent density | 1.45 g/cm$^3$ |

Comparative Example 3

The same procedures as mentioned in Example 2 were carried out except that the aromatic imide polymer powder was the same as that described in Comparative Example 1.

The results of the thermal shrinkage test are shown in Table 2.

Table 2

| Heating procedure No. | Heating time (hour) | Direction of shrinkage | Thermal shrinkage (%) | |
|---|---|---|---|---|
| | | | Example 2 | Comparative Example 3 |
| 1 | 1 | Longitudinal | 0.026 | 0.154 |
| | | Transverse | -0.005 | 0.145 |
| 2 | 1 | Longitudinal | 0.031 | 0.155 |
| | (1 + 1 = 2) | Transverse | 0.002 | 0.145 |
| 3 | 1 | Longitudinal | 0.028 | 0.148 |
| | (2 + 1 = 3) | Transverse | -0.002 | 0.152 |
| 4 | 1 | Longitudinal | 0.028 | 0.149 |
| | (3 + 2 = 5) | Transverse | -0.002 | 0.155 |

Tables 1 and 2 clearly indicate that the shaped aromatic imide polymer articles of the present invention exhibited remarkably higher mechanical strengths, for example, compression stress and compression strength, than those of conventional shaped aromatic imide polymer articles, a small loss in weight at a temperature of 400°C or more, and a small coefficient of thermal linear expansion and thermal shrinkage.

Namely, the shaped articles of the present invention exhibited a very high dimensional stability at a high temperature of 350°C or less.

Also, the shaped articles of the present invention exhibited a very high thermal deformation temperature of 500°C or less, and thus a very high heat resistance.

The shaped aromatic imide polymer articles having the above-mentioned excellent mechanical strengths, heat resistance, and thermal dimensional stability are completely novel and can not be expected from the conventional shaped aromatic imide polymer articles.

## Claims

1. A shaped aromatic imide polymer article comprising particles of an aromatic imide polymer having an average size of 0.5 to 100 μm and consisting essentially of a polymerization-imidization product of a tetracarboxylic acid component consisting of 80 to 100 molar% of at least one member selected from biphenyltetracarboxylic acids and dianhydrides, esters and salts thereof and 0 to 20 molar% of at least one additional member selected from aromatic tetracarboxylic acids and dianhydride, esters and salts thereof other than the above-mentioned biphenyltetracarboxylic compounds, with a diamine component consisting of 50 to 100 molar% of at least one member selected from phenylene diamines and 0 to 50 molar% of at least one additional member selected from aromatic diamines other than the phenylene diamine, said particles of the aromatic imide polymer being heat compression bonded to each other by a powder compression molding procedure.

2. The shaped article as claimed in claim 1, wherein the biphenyltetracarboxylic acid is selected from the group consisting of 3,3',4,4'-biphenyltetracarboxylic acid and 2,3,3',4'-biphenyltetracarboxylic acid.

3. The shaped article as claimed in claim 1, wherein the phenylene diamine is selected from the group consisting of 1,4-diaminophenylene and 1,3-diaminophenylene.

4. The shaped article as claimed in claim 1, wherein the aromatic imide polymer exhibits a second-order transition temperature of 350°C or more, or substantially does not exhibit a second-order transition temperature in a differential thermal analysis in a temperature range of 450°C or less at a heating rate of 20°C/min in a flow of nitrogen gas.

5. The shaped article as claimed in claim 1, which has an apparent density of 1.40 g/cm$^3$ or more at a temperature of 23°C.

6. A method of producing an aromatic imide polymer shaped article comprising:
charging a mold with aromatic imide polymer particles consisting essentially of a polymerization-imidization product of a tetracarboxylic acid component consisting of 80 to 100 molar% of at least one member selected from biphenyltetracarboxylic acids and dianhydrides, esters and salts thereof and 0 to 20 molar% of at least one additional member selected from aromatic tetracarboxylic acids and dianhydrides, esters and salts thereof other than the above-mentioned biphenyltetracarboxylic compounds, with a diamine component consisting of 50 to 100 molar% of at least one member selected from phenylene diamines and 0 to 50 molar% of at least one additional member selected from aromatic diamines other than the phenylene diamine, and having an average particle size of from 0.5 to 100 μm; and
heat-compressing the polymeric particles in the mold at a temperature of 200°C to 600°C under a compression pressure of 300 to 10000 kg/cm$^2$, to form a shaped article.

7. The method as claimed in claim 5, wherein the heat compressing procedure comprises a preheating step at a temperature of 100°C to 400°C under one of a reduced pressure and atmospheric pressure and at least one heat compressing step at a temperature of 250°C to 550°C under a compression pressure of 500 to 8000 kg/cm$^2$.

8. The method as claimed in claim 5, wherein the heat compressing procedure is followed by a post-heating procedure at a temperature of 400°C to 600°C under one of a reduced pressure and atmospheric pressure.

9. The method as claimed in claim 5, wherein a volatile substance generated from the charge in the mold is eliminated during the heat compressing procedure.